**Europäisches Patentamt**

**European Patent Office**

**Office européen des brevets**

(19)

(11) Veröffentlichungsnummer: **0 142 659
B1**

(12)

# EUROPÄISCHE PATENTSCHRIFT

(45) Veröffentlichungstag der Patentschrift:
**14.06.89**

(21) Anmeldenummer: **84110941.6**

(22) Anmeldetag: **13.09.84**

(51) Int. Cl.⁴: **A 47 B 47/04,** F 16 B 12/12,
A 47 C 19/20

(54) **Bauelementensatz mit aus Holz oder einem Holzwerkstoff bestehenden Bauelementen zum Aufbau von Schrankwänden und dgl.**

(30) Priorität: **17.09.83 DE 3333636**

(43) Veröffentlichungstag der Anmeldung:
**29.05.85 Patentblatt 85/22**

(45) Bekanntmachung des Hinweises auf die Patenterteilung:
**14.06.89 Patentblatt 89/24**

(84) Benannte Vertragsstaaten:
**AT BE CH FR GB IT LI LU NL SE**

(56) Entgegenhaltungen:
**DE-A- 2 414 104
DE-A- 3 014 567
DE-U- 7 516 704
FR-A- 891 744**

(73) Patentinhaber: **König, Alfons, Gödenrother Strasse 2,
D-5449 Beltheim (DE)**

(72) Erfinder: **König, Alfons, Gödenrother Strasse 2,
D-5449 Beltheim (DE)**

(74) Vertreter: **Hennig, Peter, Rheinstrasse 23,
D-5400 Koblenz (DE)**

## Beschreibung

Stand der Technik

Die Erfindung betrifft einen Bauelementensatz der Art gemäß FR-A-891 744 und gemäß einleitendem Teil des Anspruchs 1, mit aus Holz oder einem Holzwerkstoff bestehenden Bauelementen zum Aufbau von Schrankwänden und dgl.. Bauelementensätze zum Aufbau von Schrankwänden, Regalen und dgl., deren einzelne Bauelemente zumindest im wesentlichen aus Holz oder einem Holzwerkstoff bestehen, sind in verschiedenen Ausführungsformen, besonders im Hinblick auf das jeweilige Verbindungsprinzip, bekannt. So zeigt z.B. die US-PS 3 874 753 einen Bauelementensatz, dessen einzelne Bauelemente ausschließlich aus Holz bestehen und der zum Aufbau einer Schrankwand geeignet ist, die außer Regalen für die Ablage von z.B. Büchern auch die Möglichkeit der Aufnahme geschlossener, also mit Türen versehener Schrankteile, Schubladen und ähnlicher einen Schrank kennzeichnender Elemente bietet. Bei diesem Bauelementensatz ist jedoch zunächst nachteilig, daß wegen der dort verwendeten Knotenverbindung für waagerechte und senkrechte Plattenelemente nur eine verhältnismäßig geringe Standfestigkeit einer Schrankwand erreichbar ist, wobei allerdings die Verwendung von Rückwänden zwingend erforderlich ist. Ferner sind wegen des dort angewendeten Verbindungsprinzips über die gesamte Höhe der Schrankwand reichende Seitenwandelemente notwendig. Weiterhin ist nachteilig, daß die Knotenverbindung für die senkrecht aneinanderstoßenden waagerechten und senkrechten Plattenelemente wegen des stark reduzierten Querschnitts im Bereich der schwalbenschwanzförmig profilierten Verbindungsstege der Plattenelemente stark bruchgefährdet ist. Dies umsomehr, als hier wegen der Profilierung der Plattenelemente im Verbindungsbereich Kerbwirkung hinzukommt. Schließlich kann auch der Aufbau einer derartigen Schrankwand nicht leicht durchführbar sein, weil wegen der erheblichen Länge der schwalbenschwanzförmig profilierten Verbindungsstege an den Plattenelementen und entsprechend langen Nuten in den Verbindungsknoten mit verhältnismäßig hohen Widerstandskräften beim Zusammenbau zu rechnen ist.

Ferner zeigt die AT-PS 348 705 einen Bauelementensatz zum Herstellen von Schrankwänden und dgl., dessen Bauelemente ebenfalls zumindest im wesentlichen aus Holz oder einem Holzwerkstoff bestehen. Dieser Bauelementensatz weist ebenso wie der zuvor erwähnte Bauelementensatz senkrechte und waagerechte Plattenelemente auf, die durch eine spezielle Nut- und -Federverbindung miteinander durch Zusammenstecken verbindbar sind. Die Federelemente können dabei entweder aus Holz oder aber auch aus Metall bestehen und sind jedenfalls mit den waagerechten Plattenelementen fest bzw. unlösbar verbunden. Mit Hilfe dieses Bauelementensatzes kann eine Schrankwand leichter aufgebaut werden, als es im Fall des Bauelementensatzes nach der US-PS 3 874 753 der Fall ist. Auch die Belastungsfähigkeit der waagerechten Plattenelemente ist besser als im Fall des vorgenannten Bauelementensatzes. Nachteilig ist aber auch hier, daß die Standfestigkeit nicht besser als im Fall des Bauelementensatzes nach der erwähnten US-PS 3 874 753 ist und daß die Standfestigkeit jedenfalls im wesentlichen durch die in Nuten eingesetzten Rückwände bestimmt wird, die damit – ebenso wie die Seitenwände – für den Aufbau dieser Schrankwand zwingend notwendig sind. Darüberhinaus ist im Fall des Bauelementensatzes nach der AT-PS 348 705 wie auch im Fall der US-PS 3 874 753 kein vielgestaltiger, abwechslungsreicher Aufbau einer Schrankwand möglich, bedingt durch das spezielle Verbindungsprinzip der verwendeten und auf dieses Verbindungsprinzip abgestellten Bauelemente.

Weiterhin offenbart die CH-PS 495 729 einen Bauelementensatz, der vom Verbindungsprinzip her betrachtet eine gewisse Ähnlichkeit mit dem Bauelementensatz nach der genannten AT-PS 348 705 aufweist, bei dem jedoch anstelle einer Nut- und -Federverbindung im Knotenbereich dübelartige Verbindungselemente verwendet werden, die durch einander überlappende, gefalzte Bereiche der aneinanderstoßenden Kanten der waagerechten Plattenelemente geführt sind und in das darunter bzw. darüber befindliche senkrechte Plattenelement reichen. Von diesen Unterscheidungsmerkmalen abgesehen, bestehen hier dieselben Nachteile wie im Fall der vorerwähnten Bauelementensätze.

Im Hinblick auf die verhältnismäßig geringen Gestaltungsmöglichkeiten, die Notwendigkeit von Seiten- und Rückwänden und die verhältnismäßig geringe Standfestigkeit ist an dieser Stelle auch noch auf den Bauelementensatz nach der US-PS 3 644 008 hinzuweisen, bei dem die einzelnen Plattenelemente mittels metallischer Schrauben (Holzschrauben) miteinander verbunden werden müssen.

Die Nachteile der vorgenannten Bauelementensätze, nämlich geringe Standfestigkeit bzw. die Notwendigkeit von Rückwänden und Seitenwänden und die geringe mögliche Gestaltungsvielfalt gelten auch für den Bauelementensatz nach dem DE-GM 1 794 592.

Im Hinblick auf erzielbare Standfestigkeit sind mit dem Bausatz nach der CH-PS 552 961 bessere Ergebnisse zu erwarten. Jedoch mangelt es in diesem Fall ebenfalls an nennenswerter Gestaltungsfreiheit beim Aufbau. Dieser Bauelementensatz verwendet im Bereich der Kanten genutete Plattenelemente, die mittels mehr oder weniger kompliziert profilierter Verbindungsleisten aus Metall oder Kunststoff durch Ineinanderschieben miteinander verbunden werden. Dieses Konstruktionsprinzip erfordert zum Erzielen einer akzeptablen Standfestigkeit neben den hier notwendigen Seitenwänden auch Rückwände. Ästhetisch ansprechende Lösungen bzw. Aufbauten von Schrankwänden (Gestaltungsvielfalt) sind mit diesem Bauelementensatz nicht erzielbar. Ähnliches gilt für den Bauelementensatz nach der FR-PS

2 151 526, bei dem senkrechte und waagerechte Plattenelemente mittels profilierter Verbindungsleisten aus Metall oder Kunststoff unlösbar miteinander verbunden werden.

Ein Bauelementensatz zum Aufbau von Möbelstücken, der eine gewisse Gestaltungsvielfalt zuläßt, ist in der CH-PS 318 158 beschrieben. Im Fall dieses Bauelementensatzes sind jedoch spezielle, zusätzliche metallische Verbindungsmittel (Spannstangen) notwendig, die den Bauelementensatz verteuern und den Aufbau keineswegs erleichtern. Im übrigen sind auch hier Seitenwände (senkrechte Plattenelemente) zwingend erforderlich, ebenso wie Rückwände zum Erzielen einer akzeptablen Standfestigkeit. Schließlich wäre noch auf das DE-GM 7 139 553 hinzuweisen, das ein sogenanntes Knotenpunktmehrbein zeigt, welches bezüglich eines Details rein äußerlich eine gewisse Ähnlichkeit mit einem Teilmerkmal des nachstehend vorgeschlagenen, erfindungsgemäßen Bauelementensatzes aufweist.

Die FR-PS 891 744 zeigt einen als Kinderspielzeug dienenden Bauelementersatz mit Stützen, die eine gewisse Ähnlichkeit mit den Stützen des vorliegenden Anmeldungsgegenstandes haben. Einteilige, waagerecht anzuordnende Bodenelemente mit einer überhaupt erst ausreichende Steifigkeit in einen Aufbau bringenden Qualität sind bei diesem bekannten Bauelementensatz nicht vorgesehen. Dies gilt auch für das Gestell nach dem DE-GM 7 516 704.

Aufgabe

Der vorliegenden Erfindung liegt die Aufgabe zugrunde, einen Bauelementensatz mit aus Holz oder einem Holzwerkstoff bestehenden Bauelementen zum Aufbau von Schrankwänden und dgl. zu schaffen, der mit verhältnismäßig wenigen unterschiedlichen und einfach zu fertigenden Bauelementen trotz vielfältiger Gestaltungsmöglichkeiten für eine Regal- oder Schrankwand bzw. einen Raumteiler auskommt und auf einer Grundkonstruktion basiert, die sich durch überdurchschnittlich hohe Standfestigkeit und Steifigkeit des jeweiligen, gesamten Aufbaus auszeichnet, ohne daß geschlossene Seiten- und/oder Rückwände erforderlich wären. Dabei soll weiterhin ein unkomplizierter Auf- bzw. Abbau möglich sein ohne die Notwendigkeit der Verwendung spezieller Werkzeuge und/oder besonderer, speziell metallischer Verbindungsmittel.

Zur Lösung der vorstehend umrissenen Aufgabe wird erfindungsgemäß ein Bauelementensatz vorgeschlagen, der gekennzeichnet ist durch die im Anspruch 1 angegebenen Merkmale.

Vorteile

Mit dem erfindungsgemäßen Bauelementensatz können vielfältig gestaltete Schrankwände überdurchschnittlich hoher Standfestigkeit aufgebaut werden, ohne daß es besonderer, spezieller und aufwendiger, aus Metall oder Kunststoff bestehender Verbindungshilfsmittel bedürfte und ohne daß die Verwendung von Rückwänden und/oder geschlossenen Seitenwänden notwendig wäre. Dabei ist es möglich, die einzelnen Bauelemente des Bauelementensatzes ausschließlich aus Holz oder einem Holzwerkstoff zu fertigen.

In vorteilhafter weiterer Ausgestaltung wird nach Anspruch 2 vorgeschlagen, daß die Stützen wenigstens eine längs der Stütze verlaufende Lochung (senkrechte Lochreihe) aufweisen zum Einstecken von Trägerzapfen für die Auflage von Zwischenböden und dgl.. Dabei wird eine Lösung bevorzugt, die nach Anspruch 3 dadurch gekennzeichnet ist, daß die Lochung längs einer Kante der im Querschnitt etwa rechteckigen Stütze vorgesehen ist mit schräg zur Längsausdehnung der Verbindungsleisten verlaufenden Lochachsen.

In bevorzugter Ausgestaltung haben die Stützen entsprechend dem Vorschlag nach Anspruch 4 quadratischen Querschnitt, wobei die Kanten vorzugsweise gerundet ausgeführt sind. Die Wahl des quadratischen Querschnitts hat den Vorteil, daß die Stützen universeller verwendbar sind. Zum Beispiel gilt dies insbesondere dann, wenn Teile von Schrankwänden und ähnlichen Aufbauten aus dem erfindungsgemäßen Bauelementensatz einen rechten Winkel einschließen.

Gemäß Anspruch 5 ist weiterhin eine Ausgestaltung des Bauelementensatzes zweckmäßig, bei der die Stützen längs der Stützen verlaufende Nuten vorbestimmter Tiefe und der Breite der erwähnten, sich kreuzenden Schlitze entsprechender Breite aufweisen und mit dem einen oder anderen der erwähnten, sich kreuzenden Schlitze in einer Ebene liegen.

Ein besonderes Merkmal des erfindungsgemäßen Bauelementensatzes besteht nach Anspruch 6 darin, daß die plattenförmigen Elemente an den Ecken dem Querschnitt eines Fortsatzes der Stützen angepaßte Ausnehmungen aufweisen. Diese Lösung bewirkt zunächst, daß ein äußerst stabiler Aufbau einer Schrankwand oder dgl. möglich ist, weil im Fall dieser Lösung die an den Enden im Querschnitt kreuzförmig profilierten Verbindungsleisten von den einander gegenüberliegenden Fortsätzen der betreffenden beiden Stützen allseitig, d.h. bezüglich aller Fortsätze, über die gesamte Höhe der Verbindungsleiste umfaßt werden. Dies hat einen äußerst stabilen Aufbau zur Folge. – Allerdings wäre auch eine Lösung denkbar, bei der die plattenförmigen Elemente derartige Ausnehmungen nicht aufweisen, so daß dann in diesem Fall der oder die betreffenden Fortsätze an den Stützen insgesamt um die Stärke des plattenförmigen Elementes gekürzt ausgeführt sein müßten.

Zur weiteren Verbesserung der Steifigkeit des Aufbaus bzw. der Standfestigkeit trägt es bei, wenn an wenigstens einer der beiden anderen einander gegenüberliegenden Seiten der plattenförmigen Elemente den erwähnten Verbindungsleisten in der Höhe etwa angepaßte Leisten befestigt oder befestigbar sind, deren Länge derart bemessen ist, daß die Leisten an beiden Enden in die Nuten der sich gegenüberliegenden Stützen eingreifen und die Nuten in der Tiefe im wesentlichen vollständig ausfüllen. In Kombination mit dem Vorschlag nach Anspruch 6 ist dabei eine Lösung vorteilhaft, die gemäß Anspruch 7 dadurch gekennzeichnet ist, daß an den anderen, einander gegenüberliegenden Seiten der plattenförmigen Elemente den erwähnten Verbindungsleisten in der Höhe angepaßte Leisten befestigt oder befestigbar sind, die beiderseits um ein etwa der Tiefe der Nuten in den Stützen entsprechendes Maß über die betreffende, durch Wandungen der erwähnten Ausnehmungen begrenzte Seitenkante der plattenförmigen Elemente hinausreichen.

Unter Berücksichtigung der Vorschläge nach den Ansprüchen 4 und 5 ist es ferner gemäß Anspruch 8 zweckmäßig, daß die an den Enden der Stützen befindlichen, sich kreuzenden Schlitze maßlich gleich ausgeführt und zentral zur Stützenlängsachse angeordnet sind.

Zum erfindungsgemäßen Bauelementensatz gehören vorteilhafterweise ferner plattenförmige Elemente als Seitenwände mit oder ohne Aufdoppelung und/oder Rückwände, die in die Nuten sich gegenüberliegender Stützen einsetzbar sind.

Weiterhin sich gemäß Anspruch 10 vorteilhaft Sockelleisten vorgesehen, die in die Schlitze oder die Nuten einander gegenüberliegender Stützen einsetzbar sind.

Nach Anspruch 11 werden dem Querschnitt der Stützen angepaßte Abschlußstücke für die Stützen vorgeschlagen, die die erwähnten Schlitze nur am einen Ende aufweisen. Hiermit kann einer mit dem erfindungsgemäßen Bauelementensatz aufgebauten Schrankwand ein gefälliger, ansprechender Abschluß gegeben werden.

Das plattenförmige Element nach dem erfindungsgemäßen Bauelementensatz kann als Grund- und/oder Anbauelement gemäß Anspruch 12 derart ausgeführt sein, daß an ihm bereits wenigstens eine der erwähnten Verbindungsleisten unlösbar, vorzugsweise durch Leimen befestigt ist. Hierdurch kann ggfs. eine noch größere Festigkeit und Steifigkeit der Verbindung zwischen plattenförmigem Element und Verbindungsleiste geschaffen werden, wobei außerdem die sonst notwendige Verwendung der erwähnten Verbindungsmittel (Beschläge) entfällt. In diesem Zusammenhang können die plattenförmigen Elemente im Hinblick auf ihre Verwendung als Grundelement und/oder Anbauelement entsprechend dem Vorschlag nach Anspruch 13 so ausgeführt sein, daß die Enden der – damit verlängerten –, an den anderen einander gegenüberliegenden Schmalseiten der plattenförmigen Elemente angebrachten Leisten bereits Teil des erwähnten, im Querschnitt kreuzförmig profilierten Endbereiches der Verbindungsleisten sind. Leisten und Verbindungsleisten sind also in ihren einander berührenden bzw. sich überlappenden Endbereichen entsprechend lang ausgeführt und vorzugsweise durch Leimen unlösbar miteinander verbunden.

Zum Bilden des im Querschnitt kreuzförmig profilierten Endbereiches der Verbindungsleisten wird im übrigen nach Anspruch 14 vorgeschlagen, daß zu diesem Zweck an den Verbindungsleisten beidendig Führungsstücke befestigt sind mit einer der Höhe der Verbindungsleisten entsprechenden Länge. Diese Führungsstücke können ebenso wie die übrigen Elemente des Bauelementensatzes aus Holz oder einem Holzwerkstoff bestehen und ggfs. unter Zuhilfenahme von Dübeln und mittels Leimen unlösbar mit den Verbindungsleisten verbunden sein. Im Fall dieser bei einer aufgebauten Schrankwand praktisch nicht sichtbaren Führungsstücke wäre es allerdings auch möglich, aus einem geeigneten Kunststoffmaterial hergestellte Führungsstücke zu verwenden.

Schließlich betrifft die Erfindung noch einen Bauelementensatz zum Aufbau von Etagenbetten, der gekennzeichnet ist durch senkrechte Stützen vorbestimmter Länge, die an den Enden sich kreuzende Schlitze vorbestimmter Breite und Tiefe aufweisen, so daß jeweils vier sich in Längsrichtung der Stützen erstreckende Fortsätze vorbestimmten Querschnitts gebildet sind, weiterhin durch einen Rahmen, dessen Wangen in den Eckbereichen fest und vorzugsweise derart miteinander verbunden sind, daß sich im Querschnitt gesehen kreuzförmig profilierte Eckbereiche ergeben, und deren Höhe etwa der zweifachen Tiefe der Schlitze in den Stützen entspricht, weiterhin durch von den Ecken ausgehende, schräg zur Längsausdehnung der benachbarten Wangen verlaufende Bohrungen in den Wangen und damit fluchtende Bohrungen in den Stützen bzw. den Fortsätzen der Stützen, ferner durch mit den betreffenden Bohrungen in den Fortsätzen fluchtende Gewindeeinsätze in den den erwähnten Fortsätzen gegenüberliegenden Fortsätzen und schließlich durch mit den Gewindeeinsätzen korrespondierende Schraubenbolzen zum Verriegeln des Rahmens mit den Stützen.

Erläuterung der Erfindung

Anhand der Figuren 1 bis 13 der Zeichnung wird die Erfindung im folgenden näher erläutert.

Es zeigen

Fig. 1 eine mit dem erfindungsgemäßen Bauelementensatz aufgebaute Schrankwand,

Fig. 2 ein zum Aufbau der Schrankwand nach Fig. 1 verwendbares, plattenförmiges Element als mögliches Grundelement zusammen mit senkrechten Stützen in perspektivischer Darstellung und nach Art einer Explosionsdarstellung,

Fig. 3 ein waagerechtes, plattenförmiges Element als mögliches Anbauelement in der Vorderansicht,

Fig. 4 das plattenförmige Element nach Fig. 3 in der Draufsicht,

Fig. 5 eine waagerechte Verbindungsleiste in der Draufsicht,

Fig. 6 die Verbindungsleiste nach Fig. 5 in der Seitenansicht,

Fig. 7 ein zu den senkrechten Stützen nach Fig. 2 gehörendes Abschlußstück für die Stützen in perspektivischer Darstellung,

Fig. 8 eine senkrechte Stütze entsprechend der Darstellung in Fig. 2 in einer Ansicht,

Fig. 9 die Stütze nach Fig. 8 in der Draufsicht,

Fig. 10 den Verbindungsbereich von Stützen, Verbindungsleiste und plattenförmigen Elementen in der Draufsicht und in größerem Maßstab,

Fig. 11 den Verbindungsbereich von Stützen, Verbindungsleiste und plattenförmigen Elementen gemäß der Darstellung in Fig. 10 in der Vorderansicht,

Fig. 12 den Verbindungsbereich bzw. Eckbereich eines mit dem Bauelementensatz nach Anspruch 15 aufgebauten Etagenbettes und

Fig. 13 den in Fig. 12 dargestellten Verbindungsbereich bzw. Eckbereich in der Seitenansicht im Schnitt entsprechend Schnittlinie A–A in Fig. 12.

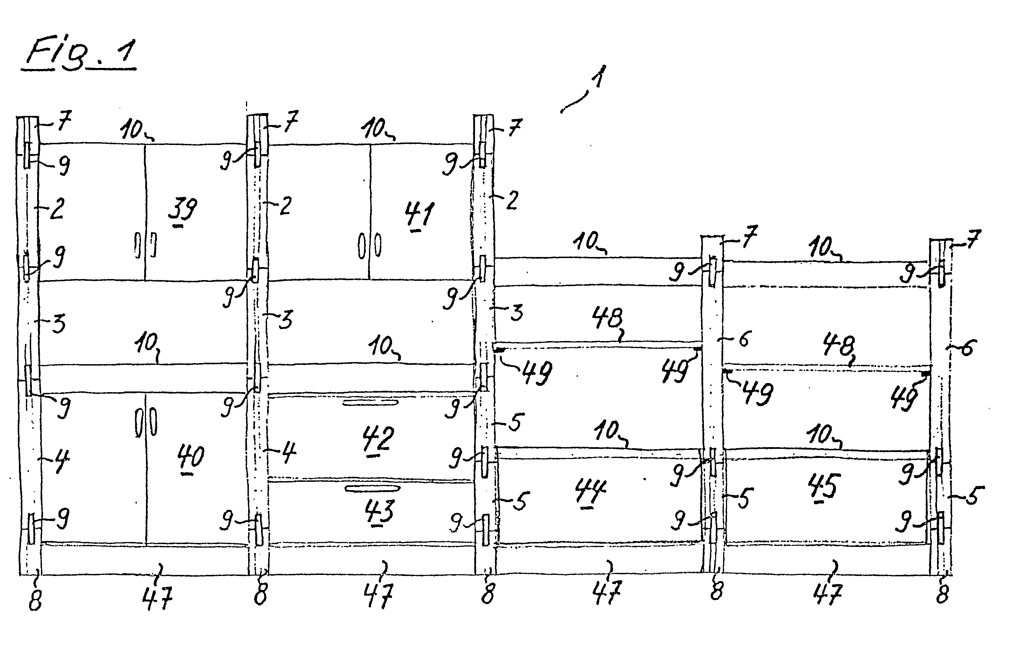

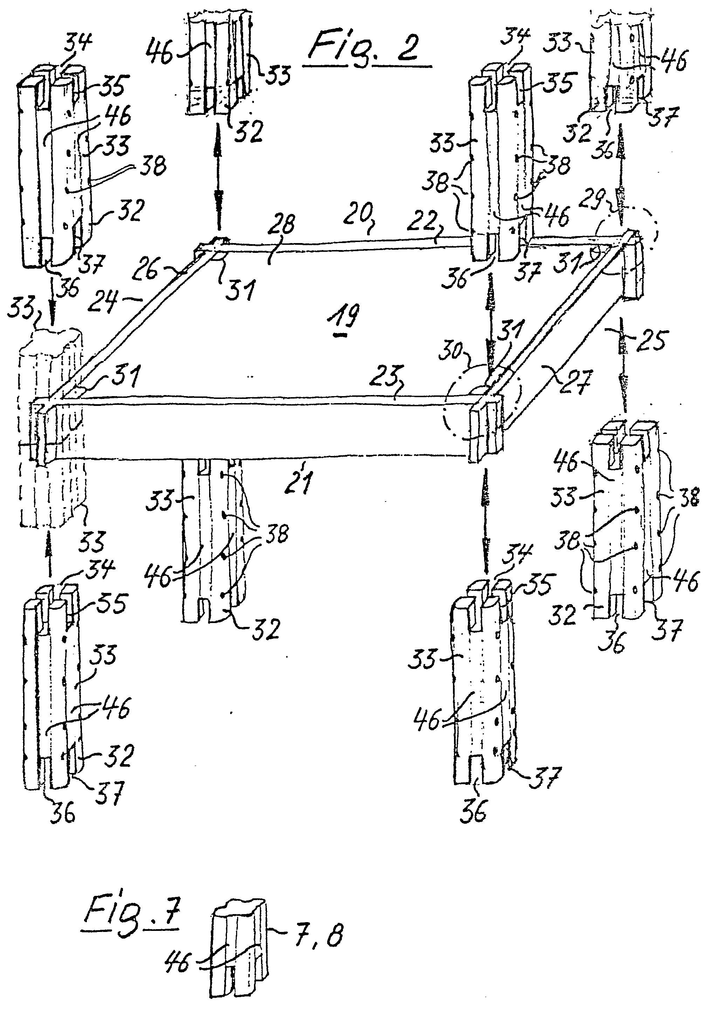

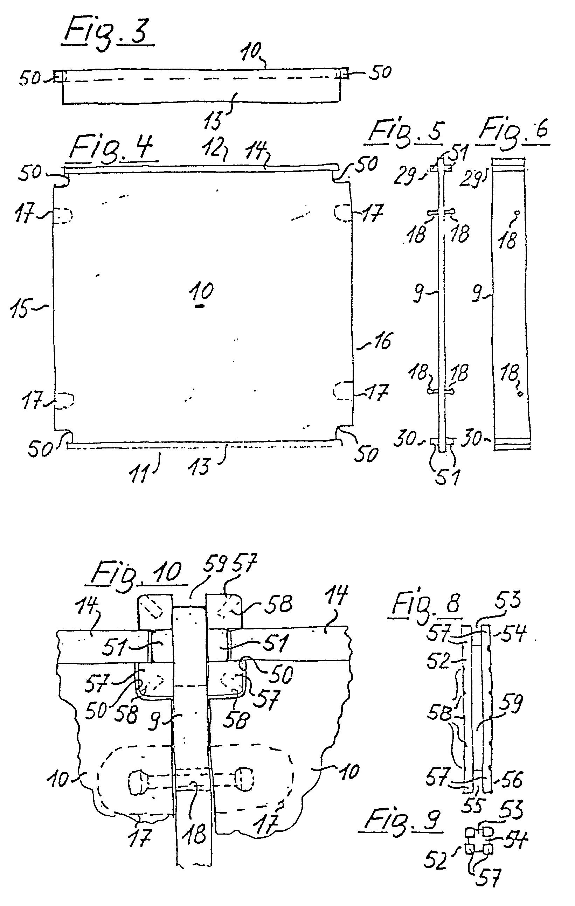

Fig. 1 zeigt eine Schrankwand 1, die im Hinblick auf die vorliegende Erfindung im wesentlichen aus Stützen 2 bis 6, den Stützen 2 bis 6 angepaßte Abschlußstücke 7 und 8, Verbindungsleisten 9 und waagerechten plattenförmigen Elementen, im folgenden als Böden 10 bezeichnet, besteht. Die – teilweise nicht sichtbaren bzw. nicht dargestellten – Böden 10 können derart ausgeführt sein, wie dies in den Fig. 3 und 4 dargestellt ist. Diese, in Fig. 3 und 4 dargestellten Böden 10 weisen an einander gegenüberliegenden Schmalseiten 11 und 12 mit den Böden vorzugsweise durch Leimen unlösbar verbundene Leisten 13 bzw. 14 auf. Die Leisten 13 und 14 entsprechen dabei in der Stärke und insbesondere in der Breite bzw. Höhe den Verbindungsleisten 9 (s. auch Fig. 5 und 6). – An den anderen einander gegenüberliegenden Schmalseiten 15 und 16 weisen die Böden 10 die einen, mit 17 bezeichneten Beschlagteile von an sich bekannten Beschlägen 17, 18 auf. Die Beschläge 17, 18 dienen zum Verbinden der Verbindungsleisten 9 mit den Böden 10. Während die in Fig. 3 und 4 dargestellten Böden gut als waagerechtes plattenförmiges Anbauelement dienen können, kann als Grundelement für die plattenförmigen Elemente bzw. Böden auch eine Ausführung gewählt werden, wie sie in Fig. 2 dargestellt ist.

Fig. 2 zeigt einen Boden 19, der an den einander gegenüberliegenden Schmalseiten 20 und 21 Leisten 22 bzw. 23 trägt, während an den anderen, einander gegenüberliegenden Schmalseiten 24 und 25 Verbindungsleisten 26 bzw. 27 befestigt sind. Leisten 22 und 23 sowie Verbindungsleisten 26 und 27 sind vorzugsweise mittels Leim unlösbar mit der mit 28 bezeichneten Bodenplatte verbunden. – Zum Bilden von im Querschnitt kreuzförmig profilierten Endbereichen 29 bzw. 30 an den selbstverständlich gleichartig ausgeführten Verbindungsleisten 26 und 27 sind diese Verbindungsleisten zum einen entsprechend lang ausgeführt, so daß deren Enden über die außen liegenden Ebenen der Leisten 22 bzw. 23 hinausragen. Zum anderen sind auch die Leisten 22 und 23 entsprechend lang ausgeführt und bilden somit mit ihren Enden den kreuzförmig profilierten Endbereich 29 bzw. 30. Die Leisten 22 und 23 sowie die Verbindungsleisten 26 und 27 sind dabei an ihren Enden entsprechend zur Hälfte geschlitzt ausgeführt, so daß die Leisten bzw. Verbindungsleisten zusammengesteckt und miteinander sowie mit der Bodenplatte 28 durch Leimen fest und unlösbar verbunden werden können.

Der Boden 19 nach Fig. 2 weist ferner an den Ecken Ausnehmungen 31 auf, die dem Querschnitt eines Fortsatzes 32 der in Fig. 2 dargestellten Stützen 33 entsprechen. Die Fortsätze 32 an den Stützen 33 entsprechen selbstverständlich zweckmäßigerweise den übrigen, nicht bezeichneten Fortsätzen, wobei die Fortsätze durch an den Enden der Stützen 33 befindliche, sich kreuzend angeordnete Schlitze 34 bis 37 gebildet sind. Die Schlitze 34 bis 37 sind bezüglich Breite und Tiefe gleich ausgeführt, wobei deren Breite der Stärke der Leisten 22, 23 bzw. Verbindungsleisten 26, 27 und deren Tiefe der halben Höhe der Leisten 22, 23 bzw. der Verbindungsleisten 26, 27 entspricht.

Für eine der Ecken des Bodens 19 in Fig. 2 ist die Verbindung des Bodens mit den Stützen 33 dargestellt, wobei die Enden der betreffenden beiden Stützen 33 gestrichelt dargestellt sind.

Im übrigen ist aus der Darstellung in Fig. 2 zu entnehmen, daß die Stützen 33 mit längs der – gerundeten – Kanten verlaufenden Lochungen versehen sind, deren Löcher 38 zum Einsetzen von Bodenträgern oder dgl. zum Auflegen von Zwischenböden dienen.

Zur Darstellung in Fig. 1 ist noch zu bemerken, daß die hier nur beispielsweise gezeigten, möglichen Schrankteile 39, 40 und 41 sowie die Schubladen 42 und 43 und die Züge 44 und 45 an – nicht dargestellten – Seitenwandteilen indirekt über eine entsprechende Aufdoppelung auf der betreffenden Seite des Seitenwandteils befestigt sein können. Das bzw. die Seitenwandteile sind in die Nuten der betreffenden, bezogen auf die Darstellung in Fig. 1 hintereinander liegenden Stützen des betreffenden Bereiches der Schrankwand eingesetzt und somit zwischen den darüber bzw. darunter befindlichen Verbindungsleisten von diesen und den Stützen gehalten. Über eine entsprechend stark ausgeführte Aufdoppelung kann erreicht werden, daß sich die damit dann ergebende lichte Breite zwischen zwei nebeneinander befindlichen Teilungen (Stützen) der Schrankwand auf übliche Weise genutzt werden kann. Z.B. können übliche Roll- und Gleitbeschläge für sogenannte Züge an den betreffenden, sich gegenüberliegenden Aufdoppelungen der betreffenden Seitenwände angebracht werden.

Weiterhin ist es selbstverständlich möglich, an der einen oder anderen Stelle der Schrankwand, z.B. im Bereich ansonsten offener Regalbereiche, Rückwände zwischen die entsprechenden Stützen einzusetzen, ähnlich wie im Fall der erwähnten Seitenwände. Die Stärke dieser Rückwände ist dabei selbstverständlich ebenso wie im Fall der Seitenwände an die Breite der Nuten in den Stützen angepaßt. Die in den Stützen 33 – wie auch in allen anderen Stützen – vorgesehenen Nuten sind in der Zeichnung mit 46 bezeichnet.

Im übrigen wäre zur Darstellung in Fig. 1 noch zu bemerken, daß durch die dort dargestellten Schrankteile, Schubladen und/oder Züge einige der Böden (waagerechte plattenförmige Elemente) verdeckt sind. – Außerdem weist die Schrankwand nach Fig. 1 zweckmäßig noch Sockelleisten 47 auf, die ebenso wie die evtl. zu verwendenden Seiten- und/oder Rückwände in die Nuten zweier gegenüberliegender Stützen, in diesem Fall in die entsprechend ausgeführten Nuten zweier sich gegenüberliegender Abschlußstücke für die Stützen einsetzbar sind.

Mit 48 bezeichnete Zwischenböden liegen auf Bodenträgern 49, die in entsprechende, in Fig. 1 nicht dargestellte Löcher 38 (s. z.B. Fig. 2) der Lochungen an den Kanten der Stützen einsetzbar sind. Zu den Löchern 38 der Lochungen wäre noch zu erwähnen, daß diese mit ihren Achsen in schräg zu den Ebenen der Seitenflächen der Stützen verlaufenden Ebenen liegen. Damit wird erreicht, daß die Bodenträger 49 derart gesetzt werden können, daß sie stets in den von vier Stützen begrenzten Raum weisen.

Die in Fig. 5 und 6 dargestellten Verbindungsleisten 9 mit den dort gezeigten, schematisch dargestellten Beschlagteilen 18 sind zusammen mit den Böden 10 und deren an den betreffenden Seitenkanten 15 bzw. 16 befindlichen Beschlagteilen 17 zu verwenden. Gleichartige Ansätze 51 an den Enden der Verbindungsleisten 9 – die durch ihre Anordnung den erwähnten, im Querschnitt kreuzförmig profilierten Endbereich 29 bzw. 30 bilden – liegen bei Verbindung der Verbindungsleisten 9 mit den Böden 10 mit den an den Böden 10 befestigten Leisten 13 bzw. 14 in einer Flucht, wobei die betreffenden, sich gegenüberliegenden Flächenbereiche dicht aneinanderliegen. Ferner weisen die Böden an den Ecken noch Ausnehmungen 50 auf, die den Ausnehmungen 31 der Böden 19 nach Fig. 2 entsprechen.

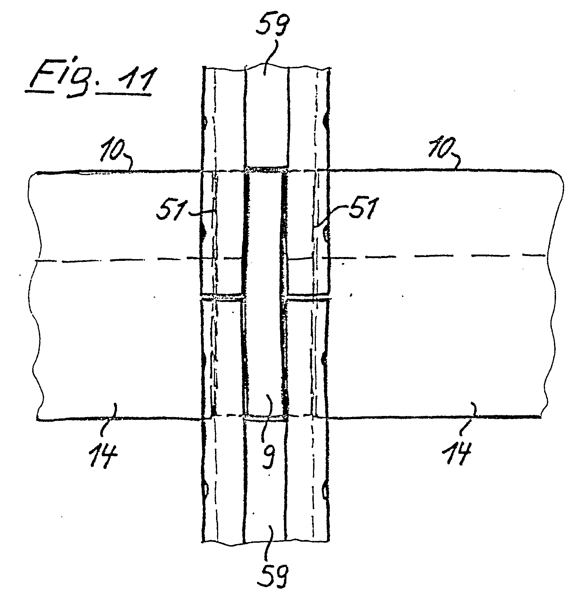

Fig. 8 und 9 zeigen eine den Stützen 33 nach Fig. 2 bis auf die Länge entsprechende Stütze 52, die an den beiden Enden mit sich kreuzenden Schlitzen 53, 54 bzw. 55, 56 versehen ist. Wie auch im Fall der Stützen 33 entspricht die Breite der Schlitze 53 bis 56 der Stärke der Leisten 13 und 14 bzw. der Verbindungsleisten 9, während die Tiefe der Schlitze 53 bis 56 etwa der halben Breite bzw. Höhe der Leisten 13 und 14 bzw. der Verbindungsleisten 9 entspricht. – Durch die Schlitze 53 bis 56 sind gleichartige Fortsätze 57 gebildet. Außerdem weist die Stütze 52 entlang der Kanten verlaufende Lochungen mit Löchern 58 auf.

Fig. 10 zeigt den Verbindungsbereich zweier senkrecht übereinander befindlicher Stützen 52 mit einer Verbindungsleiste 9 und benachbarten Böden 10 in der Draufsicht, während Fig. 11 diesen Verbindungsbereich in der Ansicht wiedergibt. – Wie insbesondere der Darstellung in Fig. 10 zu entnehmen ist, liegen die Enden der Verbindungsleiste 9 in einer Ebene mit den hier mit 59 bezeichneten Nuten der Stützen 52.

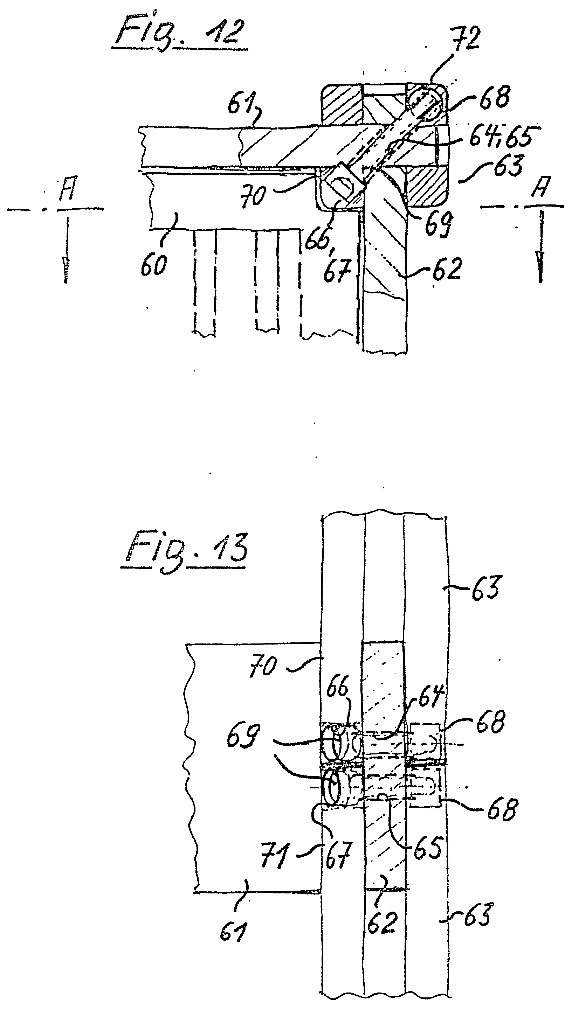

Fig. 12 und 13 zeigt den Eck- bzw. Verbindungsbereich zwischen den Wangen eines Bettrahmens für ein Etagenbett und den betreffenden, senkrecht übereinander befindlichen Stützen.

Der in Fig. 12 nur andeutungsweise dargestellte mit 60 bezeichnete Bettrahmen ist zwischen Wangen gehalten, von denen zwei benachbarte, mit 61 und 62 bezeichnete Wangen dargestellt sind. Die Wangen 61 und 62 sind derart überlappend auf an sich bekannte Weise miteinander verbunden, daß sich wie z.B. im Fall des Bodens 19 ein im Querschnitt kreuzförmig profilierter Eckbereich ergibt.

Die Verbindung der Wangen 61 und 62 und Bettrahmen 60 mit den betreffenden, mit 63 bezeichneten Stützen geschieht ähnlich wie im Fall des vorbeschriebenen Bauelementensatzes zum Aufbau einer Schrankwand. Abweichend hiervon sind jedoch im Eckbereich der Wangen 61 und 62 noch diagonal verlaufende Bohrungen 64 und 65 in den Wangen vorgesehen, mit denen eine entsprechende Bohrung 66 bzw. 67 im betreffenden Fortsatz der beiden Stützen 63 korrespondiert sowie ferner ein in den den Bohrungen 66 und 67 gegenüberliegenden Fortsätzen befindlicher Gewindeeinsatz 68 bzw. 69 fluchtet. Durch Einschrauben von Schraubenbolzen 69 durch die Bohrungen 66 bzw. 67 und 64 bzw. 65 hindurch in die Gewindeeinsätze 68 können die beiden Stützen 63 mit den Wangen 61 und 62 gegen Trennen voneinander verriegelt werden.

**Patentansprüche**

1. Bauelementensatz mit aus Holz oder einem Holzwerkstoff bestehenden Bauelementen zum Aufbau von Schrankwänden und dgl., mit

a) senkrechten Stützen (52) vorbestimmter Länge, die im wesentlichen quadratischen Querschnitt haben, und die an den Enden mit gleicher Breite und Tiefe ausgeführte, zentral zur Stützenlängsachse angeordnete, sich kreuzende Schlitze (53, 54; 55 und 56) aufweisen, so daß jeweils vier sich in Längsrichtung der Stützen (52) erstreckende Fortsätze (57) gebildet sind, und

b) längs der Stützen (52) in diesen verlaufenden Nuten (59) zum Einsetzen plattenförmiger Elemente zwischen sich gegenüberliegenden Stützen (52),
gekennzeichnet durch

c) waagerecht anzuordnende Böden (10), die an den einen einander gegenüberliegenden Schmalseiten (11, 12) Leisten (13, 14) tragen und die an den anderen einander gegenüberliegenden Schmalseiten (15, 16) mit Verbindungsleisten (9; 26, 27) fest verbunden oder verbindbar sind, deren Höhe der Höhe der erwähnten Leisten (13, 14) entspricht, und

d) von jeweils einer Leiste (13 bzw. 14), einer Verbindungsleiste (9) und einem Eckbereich des Bodens (10) eingegrenzte Ausnehmungen (50) mit einem dem Querschnitt des innenliegenden Fortsatzes einer Stütze (52) entsprechenden Querschnitt zur Aufnahme dieses Fortsatzes (57) zwischen Leisten (13, 14), Verbindungsleisten (9) und Boden (10).

2. Bauelementensatz nach Anspruch 1, dadurch gekennzeichnet, daß die Stützen (52) wenigstens eine längs der Stütze (52) verlaufende Lochung mit Löchern (38) aufweisen zum Einstecken von Bodenträgern oder dgl. (49) für die Auflage von Zwischenböden (48).

3. Bauelementensatz nach Anspruch 2, dadurch gekennzeichnet, daß die Lochung längs einer Kante der im Querschnitt etwa rechteckigen Stütze (52) vorgesehen ist mit schräg zur Längsausdehnung der Verbindungsleisten (9) verlaufenden Achsen der Löcher (38).

4. Bauelementensatz nach Anspruch 1, dadurch gekennzeichnet, daß in die Nuten (59) sich gegenüberliegender Stützen (52) einsetzbare plattenförmige Elemente vorgesehen sind.

5. Bauelementensatz nach Anspruch 1, dadurch gekennzeichnet, daß dem Querschnitt der Stützen (52) angepaßte Abschlußstücke (7, 8) für die Stützen (52) vorgesehen sind, die die erwähnten Schlitze (z.B. 53, 54) nur am einen Ende aufweisen.

6. Bauelementensatz nach Anspruch 1, gekennzeichnet durch ein plattenförmiges Element (19), an dem bereits wenigstens eine der erwähnten Verbindungsleisten (26) unlösbar, vorzugsweise durch Leimen befestigt ist.

7. Bauelementensatz nach Anspruch 1 und 6, dadurch gekennzeichnet, daß die Enden der Leisten (22, 23) Teil des erwähnten, im Querschnitt kreuzförmig profilierten Endbereiches (29; 30) der Verbindungsleisten (9 bzw. 26, 27) sind.

8. Bauelementensatz nach Anspruch 1, dadurch gekennzeichnet, daß zum Bilden des im Querschnitt kreuzförmig profilierten Endbereiches (29, 30) der Verbindungsleisten (9; 26, 27) an diesen beidseitig Ansätze (51) befestigt sind mit einer der Höhe der Verbindungsleisten (9; 26, 27) entsprechenden Länge.

9. Bauelementensatz zum Aufbau von Etagenbetten, mit folgenden Merkmalen:

a) senkrechte Stützen (63) vorbestimmter Länge, die an den Enden sich kreuzende Schlitze vorbestimmter Breite und Tiefe aufweisen, so daß jeweils vier sich in Längsrichtung der Stützen (63) erstreckende Fortsätze vorbestimmten Querschnitts gebildet sind,

b) einen Rahmen (60), dessen Wangen (61, 62) in den Eckbereichen fest und vorzugsweise derart miteinander verbunden sind, daß sich im Querschnitt gesehen kreuzförmig profilierte Eckbereiche ergeben, und deren Höhe etwa der zweifachen Tiefe der erwähnten Schlitze in den Stützen (63) entspricht,

c) von den Innenecken der Eckverbindung ausgehende, schräg zur Längsausdehnung der benachbarten Wangen (61, 62) verlaufende Bohrungen (64, 65) in den Wangen (61, 62) und damit fluchtende Bohrungen (66, 67) in den Fortsätzen (70, 71, 72) der Stützen (63),

d) mit den betreffenden Bohrungen (66, 67) in den Fortsätzen (70, 71, 72) fluchtende Gewindeeinsätze (68) in jeweils einem der erwähnten Fortsätze (70, 71, 72) und

e) mit den Gewindeeinsätzen (68) korrespondierende Schraubenbolzen (69) zum Verriegeln des Rahmens (60) mit den Stützen (63).

**Claims**

1. Set for constructing cupboards and similar, with

a) vertical supports (52) of a certain length, having a rectangular cross-section, and having at the ends crossing slits (53, 54, 55, 56) of the same breadth and depth to fit the longitudinal axis, so that four blocks are formed, and

b) having along the supports (52) connecting grooves (59) for the insertion of flat elements between opposite supports, characterised by

c) horizontally fixable bases (10) which carry on the opposite sides (11, 12) supports which can be connected on the opposite narrow sides with supporting brackets (9, 26, 27) of the same height as the afore-mentioned supports (13, 14) and,

d) inlets (50) each fixed by a support (13 or 14), a supporting bracket (9) and a corner of the base (10) having a transverse-section supported by a cross-section of the block on the inner-side for the reception of this block between the supports (13, 14) supporting brackets (9) and base (10).

2. Construction set as in claim 1, characterised by the supports (52) having at least one perforation with holes (38) along the support (52) for the insertion of supporting pins or similar (49) for the bases (48).

3. Construction set as in claim 2, characterised by the perforation being along one edge of the in cross-section rectangular support (52), with the holes (39) diagonal to the longer side of the supporting brackets (9).

4. Construction set as in claim 1, characterised by there being flat elements which can be inserted on the supports (52) placed in the grooves (59).

5. Construction set as in claim 1, characterised by covering pieces, which fit the cross-section of the supports (52), which only have the afore-mentioned slits (e.g. 53, 54) at one end.

6. Construction set as in claim 1, characterised by a flat element (19) to which at least one of the afore-mentioned connecting-brackets (26) has already been firmly attached, preferably with glue.

7. Construction set as in claim 1, characterised by the ends of the supports (22, 23) being part of the afore-mentioned cross-shaped ends (29, 30) of the supporting brackets (9 or 26, 27).

8. Construction set as in claim 1, characterised by the fact that in order to form the cross-shaped ends (29, 30) of the supporting brackets (9, 26, 27) attachments (51) are fixed of a length corresponding to the height of the supporting brackets (9, 26, 27).

9. Construction set for bunk beds, characterised by

a) vertical supports (63) of a predetermined length, which have cross-slits of a predetermined length, breadth and depth at the ends, so that in each case four projections are formed along the length of the supports (63),

b) a frame (60), of which the side-pieces (61, 62) are fixed at the corners, preferably so that in cross-section cross-shaped corners are formed, the height of which corresponds to twice the depth of the afore-mentioned slits in the supports (63),

c) from the inner-corners of the corner joints, obliquely to the length of the neighbouring side-pieces (61, 62), bore-holes, (64, 65) run in the side-pieces (61, 62) of the supports (63),

d) with screw-holes (68) corresponding to the bore-holes (66, 67), in each case in one of the afore-mentioned blocks,

e) with the corresponding screw-bolts (69) to the screw-holes (68) to bolt the frame (60) with the supports (63).

**Revendications**

1. Lot d'éléments de construction composé d'éléments de constructions en bois ou en matériau dérivé pour le montage d'éléments muraux et constructions semblables, avec:

a) des supports verticaux (52) de longueur prédéterminée ayant fondamentalement un profil carré et présentant à leurs extrémités des fentes de largeur et de profondeur égales, disposées centralement à l'axe longitudinal du support (53, 54, 55, 56) de manière à ce qu'à chaque fois quatre prolongements (57) s'avançant dans la direction longitudinale des supports (52) se forment,

b) le long des supports (52) dans ces rainures tracées (59) pour le montage d'éléments en forme de panneau entre les supports opposés (52), caractérisé par

c) des plateaux (10) à disposer horizontalement, portant à leurs flancs opposés (11, 12) des baguettes (13, 14) et qui sont joints ou combinables par des baguettes de jonction (9, 26, 27) aux autres flancs opposés (15, 16), dont la hauteur correspond à celle des baguettes (13, 14) mentionnées ci-dessus, et

d) de chaque baguette (13, 14), de chaque baguette de jonction (9) et de chaque angle du plateau (10) des creux déterminés (50) par un profil de prolongement intérieur d'un support (52), profil correspondant au logement de ce prolongement (57) entre supports (13, 14), baguettes de jonction (9) et plateau (10).

2. Lot d'éléments de construction selon la revendication 1, caractérisé en ce que les supports (52) présentent au moins une perforation le long du support avec des trous (38) permettant l'assemblage des porte-plateaux ou autres (49) pour appui de plateaux intermédiaires (48).

3. Lot d'éléments de construction selon la revendication 2, caractérisé en ce que la perforation est pourvue d'une arête du support dont le profil est à peu près carré avec des trous (38) dont les axes sont en diagonale pour permettre une extension longitudinale des baguettes de jonction (9).

4. Lot d'éléments de construction selon la revendication 1, caractérisé en ce que dans les rainures (59) des supports opposés (52) des éléments en forme de panneaux, à insérer, sont prévus.

5. Lot d'éléments de construction selon la revendication 1, caractérisé en ce qu'au profil des supports (52), des pièces terminales adaptées (7, 8) sont prévues pour les supports; ne présentant les fentes mentionnées (par exemple 53, 54) qu'à une des extrémité.

6. Lot d'éléments de construction selon la revendication 1, caractérisé par un élément en forme de panneau (19) auquel déjà au moins une des baguettes de jonction mentionnées (26) est indétachable, de préférence fixée à la colle.

7. Lot d'éléments de construction selon les revendications 1 et 6, caractérisé en ce que les extrémités des baguettes (22, 23) font partie de la zone finale (mentionnée, avec un profil en forme de croix) (29, 30), des baguettes de jonction (9 ou 26, 27).

8. Lot d'éléments de construction selon la revendication 1, caractérisé en ce que pour la formation de la zone finale (29, 30) au profil en forme de croix des baguettes de jonction (9, 26, 27) auxquelles sont fixées des deux côtés des pièces ajustées (51) à une longueur correspondant à une des hauteurs des baguettes de jonction (9, 26, 27).

9. Lot d'éléments de construction pour le montage de lits superposés aux caractéristiques suivantes:

a) des supports verticaux (63) de longueur prédéterminée présentant une largeur et une profondeur prédéterminées aux extrémités des fentes croisées, de manière à ce qu'à chaque fois quatre prolongements avancés de profil prédéterminé soient formés dans le sens longitudinal des supports (63),

b) un cadre (60) dont les faces (61, 62) sont fixes et de préférence jointes de manière à ce qu'il en résulte des angles au profil en forme de croix et dont la hauteur corresponde à peu près au double de la profondeur des fentes mentionnées, dans les supports (63),

c) partant des angles intérieurs de l'assemblage des coins, diagonalement à l'extension longitudinale des faces voisines (61, 62), des percages (64, 65) circulant dans les faces (61, 62) et en même temps alignés (66, 67) dans les prolongements (70, 71, 72) des supports (63),

d) avec les percages en question (66, 67) dans les prolongements (70, 71, 72) des broches filetées alignées (68) dans un des prolongements mentionnés (70, 71, 72) et

e) aux broches filetées (68) correspondent des boulons filetés (69) pour le blocage du cadre (60) avec les supports (63).

_Fig. 1_

Fig. 2

Fig. 7

7, 8

_Fig.3_

_Fig.4_

_Fig.5_   _Fig.6_

10

50

50

13

12  14

17

17

15

10

16

17

17

50   50

11   13

29'   51   29'

18   18   18

9   9

18   18   18

30   30

51

_Fig.10_   59 57

14   58   14

51   51

57   50

50 58   9   58

10   10

17   18   17

_Fig.8_   53

57   54

52

58   59

57   56

55   53

_Fig.9_   54

52   57

Fig. 11

_Fig. 12_

_Fig. 13_